# EUROPEAN PATENT SPECIFICATION

(11) **EP 3 793 827 B1**
(45) Date of publication and mention of the grant of the patent: **28.02.2024**
(21) Application number: 19729850.8
(22) Date of filing: 15.05.2019
(51) Int. Cl.: B32B 29/00, E04F 19/06

(54) **WRAPPING FOIL, METHOD OF MANUFACTURE THEREOF AND FINISHING PROFILE**
EINWICKLUNGSFOLIE, VERFAHREN ZU IHRER HERSTELLUNG UND ENDBEARBEITUNGSPROFIL
FEUILLE D'ENVELLOPPEMENT, PROCÉDÉ DE FABRICATION ASSOCIÉ, ET PROFIL DE FINITION

(30) Priority: 17.05.2018 BE 201805323
(43) Date of publication of application: 24.03.2021
(73) Proprietor: Flooring Industries Limited, SARL, 8070 Bertrange (LU)
(72) Inventor: DE COCK, Hans, 9551 Herzele (BE); WILMOTS, Pieter, 9790 Peteghem-aan-de-Schelde (BE)
(74) Representative: Unilin Technologies
(86) International application number: PCT/IB2019/054008
(87) International publication number: WO 2019/220354

(56) References cited:
- CA-A- 1 057 599
- US-A- 3 556 915

## Description

The present invention relates to a wrapping foil, a method of manufacturing said wrapping foil, as well as to a finishing profile, in particular to a finishing profile for a covering, such as a floor covering, ceiling covering, or wall covering, which is covered with such wrapping foil.

Finishing profiles such as skirting boards or transition profiles are widely known per se. They may be used for example for finishing the edges of a floor covering. Profiles of this kind may consist of a core material, for example of MDF, HDF, multiplex, plastic, and a layer shaped covering. Said layer shaped covering may for example be performed to match the floor covering. According to the prior art, such layer shaped covering may be performed in various possible ways. It may consist of wood veneer, for example matching a parquet floor, of a decorative plastic film, or of laminate. Such laminate may comprise two paper sheets, namely a printed paper sheet and a heavy carrier sheet, wherein both sheets are provided with a maximum amount of resin, for example melamine-based resin. Although laminate is accepted as a good-quality coating, it shows disadvantages regarding processability and the logistic effort required for manufacturing laminates that for example match a laminate floor covering. For example, it may be difficult for corner portions of profiles with small radii to be coated at high speed without formation of cracks of the laminate. The laminates must be attached to the core material with PU adhesives, and the provision of decorative paper provided with resin specifically for skirting boards requires an intensive planning, wherein surpluses are difficult to avoid. At least some aspects of the aforementioned methodologies are illustrated by US 3 556 915 A and CA 1 057 599 A .

The present invention relates firstly to an alternative laminate, which may be used as a wrapping foil and which, according to various preferred embodiments, offers advantages compared to the laminates of the prior art.

For this purpose, according to its first aspect the invention relates to a wrapping foil, with the characteristic that this wrapping foil is assembled from:
- a, preferably transparent or translucent, paper sheet with a paper weight from 15 to 30 grams per square meter that is provided with resin, wherein the dry weight of the applied resin is at least as much as the paper weight, and preferably is at least 150% or at least 200% of the paper weight, wherein amounts of resin of 250% or 300% or more are not excluded;
- a printed paper sheet with a paper weight from 50 to 90 grams per square meter, and better still 60 to 80 grams per square meter, which is resin-free or is provided with an amount of resin for which the dry weight is less than half the paper weight;
- a carrier sheet with a paper weight less than or equal to the paper weight of the aforementioned printed paper sheet, wherein this carrier sheet is resin-free or is provided with an amount of resin for which the dry weight is less than half the paper weight of the carrier sheet in question.

It is to be noted that during assembly of the wrapping foil, the resin of said paper sheets will be redistributed, and that mainly the resin of the transparent or translucent paper sheet will migrate through the printed paper sheet to the carrier sheet.

Because the wrapping foil is assembled in the aforementioned manner, a more flexible carrier sheet is produced, which can be used more easily and more smoothly, i.e. at high speeds, in a wrapping process, for example for the production of finishing profiles that have corner portions with small radii, for example less than 3 mm, or less than 1.5 mm. This advantage is obtained through the combination of specific low paper weights and limited application of resin on the bottommost paper layers, namely the printed paper sheet and the carrier. In addition, by using a paper sheet above the printed paper sheet, namely by applying a translucent or transparent varnished paper sheet, an increased wear resistance is obtained. Further, the inventor has noted that, despite the limited weight of the carrier, the abovementioned composition of the wrapping foil still provides an acceptable impact strength. Moreover, sufficient penetration of the resin into the underlying layers is obtained, so that when a profile wrapped with said foil is sawn, no, or an acceptable, fraying of for example the printed paper sheet is obtained.

The aforementioned, preferably transparent or translucent paper sheet, preferably relates to a paper sheet that is free from fillers, such as titanium dioxide, and/or has an ash content of less than 0.5 weight percent, and even better of 0 or almost 0 weight percent. Preferably it relates to an alpha-cellulose paper sheet, for example a paper sheet known under the denomination "overlay".

According to a particular embodiment, the preferably transparent or translucent paper sheet and/or the printed paper sheet are provided with wear-resistant particles, such as aluminum oxide particles. Said particles may be present in the bulk of the paper sheet, and/or may be applied in a mixture together with the aforementioned resin. Said particles preferably have an average particle size between 10 and 100 micrometers. Namely when the wrapping foil is used in heavily loading circumstances, for example in a floor surface or on a staircase, preferably at least 5 grams per square meter of such particles is applied. Preferably said particles are present in the wrapping foil on a position above the print of the printed paper sheet.

According to a particular possibility of the abovementioned particular embodiment, the wear-resistant particles, preferably aluminum oxide particles, are applied by scattering on the side of the transparent or translucent paper sheet that faces outwards in the wrapping foil. The inventors have noted that this embodiment gives rise to a tactile sensation of the surface of the wrapping foil that strongly resembles that of wood veneer. Such embodiment is hence especially advantageous in case the printed paper sheet shows a wood pattern.

The paper sheets of the aforementioned composition relate to impregnatable papers, namely paper that shows a Gurley value (Tappi T460) of less than 30 seconds, and preferably of 20 seconds or less. The flow of the resin from the preferably transparent or translucent paper sheet to the underlying paper sheets is thus promoted.

Preferably at least the printed paper sheet is resin-free. Hereby the important advantage is obtained that the logistic effort required for impregnating the decorative paper falls away. In addition, if there are surpluses, less waste will be produced, since no resin is present on the printed paper to be removed.

Preferably the carrier sheet is resin-free. Because the carrier sheet is resin-free, a maximum flexibility is obtained in the final wrapping foil. In addition, a situation may be reached in which the underside of the carrier sheet remains substantially resin-free, or at least shows resin-free paper fibers. This condition is interesting for gluing the related wrapping foil to the core material of a finishing profile. Scouring operations or other roughening treatments, such as plasma treatment, can be avoided. In addition, wrapping foil of this kind can be glued using a polyolefin glue.

By preference, the aforementioned wrapping foil comprises a preferably transparent or translucent paper sheet, a printed paper sheet and a carrier sheet, and further comprises a resin, wherein the total weight of the paper sheets present in the wrapping foil is less than 175 grams per square meter, and that the wrapping foil comprises an amount of resin for which the dry weight is less than the total weight of paper present in the wrapping foil. It is clear that such wrapping foil may optionally be assembled as described in the context of the aforementioned first aspect of the invention, and may have similar advantages and preferred embodiments.

Preferably the aforementioned total paper weight of the wrapping foils of the first aspect is between 100 and 150 grams per square meter. The weight is preferably higher than 100 grams per square meter in order to obtain sufficient impact strength and opacity, and so that sufficient resin may be obtained in the wrapping foil. One or more paper sheets namely also have, according to the invention, the function of resin carrier. The total weight of the paper is preferably less than 150 grams per square meter with a view to maintaining sufficient flexibility and good resin penetration.

Preferably the wrapping foil comprises an amount of resin for which the dry weight is less than 100 grams per square meter.

Preferably the underside of the wrapping foil is not saturated with resin and/or free paper fibers are present on the underside of the wrapping foil, i.e. paper fibers not provided with resin. An underside of this kind allows simple gluing of the wrapping foil to a core material of a finishing profile, for example even by means of a polyolefin glue.

Preferably the aforementioned resin is a melamine-based resin, such as a melamine-formaldehyde resin. Alternatively, another thermosetting resin may be used, such as a urea-formaldehyde resin or a phenol-formaldehyde resin.

As mentioned above, a melamine-based resin, for example melamine-formaldehyde, is preferably selected for the thermosetting resin of the wrapping foil, or at least of the preferably transparent or translucent paper sheet. Of course, the resin may comprise one or more additives. Flow improvers, such as polyglycol ether, epsilon-caprolactam, ethylene glycol, phthalic acid, phthalates or butanediol, hardeners, such as maleic acid, monobutylphosphoric acid, p-toluenesulfonic acid, citric acid, a mixture of one or more of these acids, aluminum sulfate, ammonium chloride or ammonium sulfate or other acids or salts which produce an acid pH in solution, release agents, and the like may be used as additives. An especially useful additive is a part of an acrylate resin, a polyol, such as butanediol or polyurethane diol, a polyol acrylate or some other hydroxy-functional acrylate. Said resin may be at least partially crosslinked or cured, while still maintaining sufficient processability of the wrapping foil. Working with a hydroxy-functional acrylate, or in other words with an acrylate that comprises an OH group, has the advantage that OH groups may be introduced into the melamine, because the acrylate is soluble in melamine.

It is for example possible to work with 30-75 parts by weight of liquid melamine-formaldehyde resin with for example 15 to 45 weight percent solids, 5-10 parts by weight of a polyol or polyol acrylate and 2-3 parts by weight of flow improver. According to a particular embodiment the aforementioned resin thus further comprises an acrylate resin, a polyol, such as butanediol or polyurethane diol, a polyol acrylate or another hydroxy-functional acrylate. On the basis of said additive, the flexibility of a cured or semi-cured resin, such as a melamine-based resin, may be improved. In this way, even corner portions with small radii, for example 1.5 mm or smaller, can be coated easily.

With the same viewpoint as in the first aspect, the present invention further relates, according to its second independent aspect, to a method of manufacturing a wrapping foil, with the characteristic that following paper sheets are laminated by means of a, preferably heated, pressing operation:
- a, preferably transparent or translucent, paper sheet with a paper weight from 15 to 30 grams per square meter that is provided with resin, wherein the dry weight of the applied resin is at least as much as the paper weight;
- a printed paper sheet with a paper weight from 50 to 90 grams per square meter, and better still 60 to 80 grams per square meter, which is resin-free or is provided with an amount of resin for which the dry weight is less than half the paper weight;
- a carrier sheet with a paper weight less than or equal to the paper weight of the aforementioned printed paper sheet, wherein this carrier sheet is resin-free or is provided with an amount of resin for which the dry weight is less than half the paper weight of the carrier sheet in question.

It is self-evident that the method of the second aspect may be used for manufacturing a wrapping foil according to the first and/or second aspect and/or the preferred embodiments thereof, and that the wrapping foil obtained gives rise to similar advantageous effects.

It is clear that, according to a third independent aspect, the invention further relates to a finishing profile for finishing a covering, such as a floor covering, wall covering or ceiling covering, wherein the aforementioned finishing profile substantially consists of a core and a layer shaped covering, with the characteristic that the layer shaped covering is obtained by wrapping with a wrapping foil according to, respectively manufactured according to, one of the foregoing aspects and/or the preferred embodiments thereof.

Preferably the aforementioned layered covering is applied in one piece over a corner portion of the finishing profile, wherein the radius of the angular part is less than 3 mm, preferably less than 1.5 mm. It is clear that it is precisely the wrapping foil of the present invention according to its first and second aspect that allows said wrapping. Preferably the finishing profile relates to a skirting board, wherein said corner portion forms the transition between the front side and the top side of said skirting board. Skirting boards wrapped with laminate are known per se, for example from WO 2005/059270.

It is clear that instead of a skirting board, the aforementioned finishing profile may also be a transition profile, an expansion profile, a stair nosing profile, a corner profile or an end profile. Transition profiles, expansion profiles, end profiles and stair nosing profiles are for example known per se from EP 2 388 388 and EP 1 836 363 and may be used for finishing a, whether or not floating, floor covering. Corner profiles may be used for example for finishing the edges of a ceiling.

The wrapping foil of the present invention may also be used as a decorative covering of ceiling, wall and/or floor panels. According to a particular embodiment said wrapping foil is used for covering shell-shaped elements that may be used for covering stair treads, wherein the surface of the stair tread or a part thereof, together with the stair nosing and/or a part of the riser, is covered by means of said shell-shaped element.

It is clear that the aforementioned carrier sheet in the wrapped finishing profile is located closest to the core material, and that the printed paper sheet is positioned between the carrier sheet and the, preferably translucent or transparent, paper sheet, wherein the latter, together with the resin present thereon, preferably forms the outer side of the finishing profile. This last-mentioned paper sheet may optionally have a structure of recesses, which for example imitates a wooden structure. Other structures such as stone structures are of course possible. Preferably a structure is used that matches, or may even be completely in accordance with, the printed paper sheet. Further, it is clear that the printed paper sheet preferably shows a print such as those usually employed for imitation floor panels, for example such as a print in the form of a wood pattern or a stone pattern.

The print of the paper sheet may be obtained in various ways, for example by means of rotogravure. According to a particular embodiment the paper sheet is printed by means of an inkjet. The inventors have noted that precisely because of the composition of the wrapping foil according to one or more of the foregoing aspects, an inkjet printed paper sheet can be used smoothly. Normally printing by means of inkjet makes impregnation of a paper sheet difficult, since the inks form an almost impenetrable film on the surface of the paper sheet. In the composition of the wrapping foil according to the invention, a complete resination of the printed paper sheet is not desirable and is preferably excluded. Nevertheless, the inventors have noted that the wrapping foil obtained does not suffer delamination. This is probably due to the pressing operation, which may be used for laminating the constituent paper sheets, wherein the resin then penetrates the ink film under pressure.

## Claims

1. Wrapping foil, **characterized in that** said wrapping foil is assembled from:
- a preferably transparent or translucent paper sheet with a paper weight from 15 to 30 grams per square meter that is provided with resin, wherein the dry weight of the applied resin is at least as much as the paper weight;
- a printed paper sheet with a paper weight from 50 to 90 grams per square meter, and better still 60 to 80 grams per square meter, which is resin-free or is provided with an amount of resin for which the dry weight is less than half the paper weight;
- a carrier sheet with a paper weight less than or equal to the paper weight of the aforementioned printed paper sheet, wherein this carrier sheet is resin-free or is provided with an amount of resin for which the dry weight is less than half the paper weight of the carrier sheet in question.

2. Wrapping foil according to claim 1, **characterized in that** at least the printed paper sheet, and preferably also the carrier sheet, are resin-free.

3. Wrapping foil according to one of the preceding claims, **characterized in that** the aforementioned wrapping foil comprises a preferably transparent or translucent paper sheet, a printed paper sheet and a carrier sheet, and further comprises a resin, wherein the total weight of the paper sheets present in the wrapping foil is less than 175 grams per square meter, and the wrapping foil comprises an amount of resin for which the dry weight is less than the total weight of paper present in the wrapping foil.

4. Wrapping foil according to claim 3, **characterized in that** the aforementioned total paper weight is between 100 and 150 grams per square meter.

5. Wrapping foil according to claim 3 or 4, **characterized in that** the wrapping foil comprises an amount of resin for which the dry weight is less than 100 grams per square meter.

6. Wrapping foil according to one of claims 3 to 5, **characterized in that** the underside of the wrapping foil is not saturated with resin.

7. Wrapping foil as claimed in one of claims 3 to 6, **characterized in that** free paper fibers are present on the underside of the wrapping foil.

8. Wrapping foil according to one of claims 3 to 7, **characterized in that** the aforementioned resin is a melamine-formaldehyde resin or a urea-formaldehyde resin or a phenol-formaldehyde resin.

9. Wrapping foil according to claim 8, **characterized in that** the aforementioned resin further comprises an acrylate resin, a polyol, such as butanediol or polyurethane diol, a polyol acrylate or some other hydroxy-functional acrylate.

10. A method of manufacturing a wrapping foil, **characterized in that** following paper sheets are laminated in a, preferably heated, pressing operation:
- a preferably transparent or translucent paper sheet with a paper weight from 15 to 30 grams per square meter that is provided with resin, wherein the dry weight of the applied resin is at least as much as the paper weight;
- a printed paper sheet with a paper weight from 50 to 90 grams per square meter, and better still 60 to 80 grams per square meter, which is resin-free or is provided with an amount of resin for which the dry weight is less than half the paper weight;
- a carrier sheet with a paper weight less than or equal to the paper weight of the aforementioned printed paper sheet, wherein this carrier sheet is resin-free or is provided with an amount of resin for which the dry weight is less than half the paper weight of the carrier sheet in question.

11. Method according to claim 10, **characterized in that** the aforementioned wrapping foil further has the features of one or more of claims 2 to 9.

12. Finishing profile for finishing a covering, such as a floor covering, wall covering or ceiling covering, wherein the aforementioned finishing profile substantially consists of a core and a layer shaped covering, **characterized in that** the layer shaped covering is obtained by wrapping with a wrapping foil according to, respectively manufactured according to, one of claims 1 to 11.

13. Finishing profile according to claim 12, **characterized in that** the aforementioned layer shaped covering is applied as one piece over a corner portion of the finishing profile, wherein the radius of the corner portion is less than 3 mm, preferably less than 1.5 mm.

14. Finishing profile according to claim 13, **characterized in that** the finishing profile is a skirting board, wherein said corner portion forms the transition between the front side and the top side of said skirting board.

## Patentansprüche

1. Umhüllungsfolie, **dadurch gekennzeichnet, dass** die vorgenannte Umhüllungsfolie zusammengesetzt ist aus:
- einem vorzugsweise transparenten oder transluzenten Papierbogen, der ein Papiergewicht von 15 bis 30 Gramm pro Quadratmeter hat, der mit einem Harz versehen ist, wobei das Trockengewicht des aufgebrachten Harzes mindestens so hoch ist wie das Papiergewicht;
- einem bedruckten Papierbogen, der ein Papiergewicht von 50 bis 90 Gramm pro Quadratmeter und noch besser von 60 bis 80 Gramm pro Quadratmeter hat, der frei von Harz ist oder mit einer Harzmenge versehen ist, bei der das Trockengewicht weniger als die Hälfte des Papiergewichts beträgt;
- einem Trägerbogen, der ein Papiergewicht umfasst, das kleiner oder gleich dem Papiergewicht des oben genannten bedruckten Papierbogens ist, wobei dieser Trägerbogen harzfrei ist oder mit einer Harzmenge versehen ist, bei der das Trockengewicht weniger als die Hälfte des Papiergewichts des betreffenden Trägerbogens beträgt.

2. Umhüllungsfolie nach Anspruch 1, **dadurch gekennzeichnet, dass** zumindest der bedruckte Papierbogen und vorzugsweise auch der Trägerbogen harzfrei sind.

3. Umhüllungsfolie nach einem der vorhergehenden Ansprüche, **dadurch gekennzeichnet, dass** die oben erwähnte Umhüllungsfolie einen vorzugsweise transparenten oder durchscheinenden Papierbogen, einen bedruckten Papierbogen und einen Trägerbogen umfasst und ferner ein Harz umfasst, wobei das Gesamtgewicht der in dem Umhüllungsfolie vorhandenen Papierbogen weniger als 175 Gramm pro Quadratmeter beträgt und die Umhüllungsfolie eine Menge an Harz umfasst, bei der das Trockengewicht geringer ist als das Gesamtgewicht des in der Umhüllungsfolie vorhandenen Papiers.

4. Umhüllungsfolie nach Anspruch 3, **dadurch gekennzeichnet, dass** das oben genannte Gesamtgewicht des Papiers zwischen 100 und 150 Gramm pro Quadratmeter liegt.

5. Umhüllungsfolie nach Anspruch 3 oder 4, **dadurch gekennzeichnet, dass** die Umhüllungsfolie eine Harzmenge umfasst, bei der das Trockengewicht weniger als 100 Gramm pro Quadratmeter beträgt.

6. Umhüllungsfolie nach einem der Ansprüche 3 bis 5, **dadurch gekennzeichnet, dass** die Unterseite der Umhüllungsfolie nicht mit Harz gesättigt ist.

7. Umhüllungsfolie nach einem der Ansprüche 3 bis 6, **dadurch gekennzeichnet, dass** auf der Unterseite der Umhüllungsfolie freie Papierfasern vorhanden sind.

8. Umhüllungsfolie nach einem der Ansprüche 3 bis 7, **dadurch gekennzeichnet, dass** das oben erwähnte Harz ein Melamin-Formaldehyd-Harz oder ein Harnstoff-Formaldehyd-Harz oder ein Phenol-Formaldehyd-Harz ist.

9. Umhüllungsfolie nach Anspruch 8, **dadurch gekennzeichnet, dass** das oben erwähnte Harz zusätzlich ein Acrylharz, ein Polyol wie Butandiol oder Polyurethandiol, ein Polyolacrylat oder ein beliebiges anderes Acrylat, das eine funktionelle Hydroxylgruppe enthält, umfasst.

10. Verfahren zur Herstellung einer Umhüllungsfolie, **dadurch gekennzeichnet, dass** die nachfolgend aufgeführten Papierblätter während eines Pressvorgangs, vorzugsweise unter Erhitzen, laminiert werden:
- ein vorzugsweise transparenter oder transluzenter Papierbogen, der ein Papiergewicht von 15 bis 30 Gramm pro Quadratmeter hat, der mit einem Harz versehen ist, wobei das Trockengewicht des aufgebrachten Harzes mindestens so hoch ist wie das Papiergewicht;
- ein bedruckter Papierbogen, der ein Papiergewicht von 50 bis 90 Gramm pro Quadratmeter und noch besser von 60 bis 80 Gramm pro Quadratmeter hat, der frei von Harz ist oder mit einer Harzmenge versehen ist, bei der das Trockengewicht weniger als die Hälfte des Papiergewichts beträgt;
- ein Trägerbogen, der ein Papiergewicht hat, das kleiner oder gleich dem Papiergewicht des oben erwähnten bedruckten Papierbogens ist, wobei dieser Trägerbogen harzfrei ist oder mit einer Harzmenge versehen ist, bei der das Trockengewicht weniger als die Hälfte des Papiergewichts des betreffenden Trägerbogens beträgt.

11. Verfahren nach Anspruch 10, **dadurch gekennzeichnet, dass** die oben erwähnte Umhüllungsfolie zusätzlich die Merkmale in Übereinstimmung mit einem oder mehreren der Ansprüche 2 bis 9 aufweist.

12. Veredelungsprofil für die Fertigstellung eines Belags wie eines Bodenbelags, eines Wandbelags oder eines Deckenbelags, wobei das oben erwähnte Veredelungsprofil im Wesentlichen aus einem Kern und einem Belag, der eine schichtförmige Konfiguration hat, besteht, **dadurch gekennzeichnet, dass** der Belag, der eine schichtförmige Konfiguration hat, durch Umhüllen mit einer Umhüllungsfolie nach einem der Ansprüche 1 bis 11 bzw. mit einer nach einem dieser Ansprüche hergestellten Umhüllungsfolie erzielt wird.

13. Veredelungsprofil nach Anspruch 12, **dadurch gekennzeichnet, dass** der oben erwähnte Belag mit einer schichtförmigen Konfiguration in einem Stück auf einen Eckabschnitt des Veredelungsprofils aufgebracht wird, wobei der Radius des Eckabschnitts weniger als 3 mm, vorzugsweise weniger als 1,5 mm, beträgt.

14. Veredelungsprofil nach Anspruch 13, **dadurch gekennzeichnet, dass** das Veredelungsprofil eine Sockelleiste ist, wobei der Eckabschnitt den Übergang zwischen der Vorderseite und der Oberseite der Sockelleiste bildet.

## Revendications

1. Feuille d'enveloppement **caractérisée en ce que** ladite feuille d'enveloppement est assemblée à partir de :
- une feuille de papier, de préférence transparente ou translucide, qui possède un grammage du papier de 15 à 30 grammes par mètre carré, qui est munie d'une résine, dans laquelle le poids à sec de la résine appliquée est au moins aussi élevé que le grammage du papier ;
- une feuille de papier imprimée qui possède un grammage du papier de 50 à 90 grammes par mètre carré et encore mieux de 60 à 80 grammes par mètre carré, qui est exempte de résine ou qui est munie d'une quantité de résine pour laquelle le poids à sec est inférieur à la moitié du grammage du papier ;
- une feuille de support qui possède un grammage du papier inférieur ou égal au grammage du papier de la feuille de papier imprimée mentionnée ci-dessus, dans laquelle cette feuille de support est exempte de résine ou est munie d'une quantité de résine pour laquelle le poids à sec est inférieur à la moitié du grammage du papier de la feuille de support en question.

2. Feuille d'enveloppement selon la revendication 1, **caractérisée en ce qu'**au moins la feuille de papier imprimée, et de préférence également la feuille de support, sont exemptes de résine.

3. Feuille d'enveloppement selon une des revendications précédentes, **caractérisée en ce que** la feuille d'enveloppement mentionnée ci-dessus comprend une feuille de papier de préférence transparente ou translucide, une feuille de papier imprimée et une feuille de support, et comprend en outre une résine, dans laquelle le grammage total des feuilles de papier présentes dans la feuille d'enveloppement est inférieur à 175 grammes par mètre carré, et la feuille d'enveloppement comprend une quantité de résine pour laquelle le poids à sec est inférieur au grammage total du papier présent dans la feuille d'enveloppement.

4. Feuille d'enveloppement selon la revendication 3, **caractérisée en ce que** le grammage total du papier mentionné ci-dessus se situe entre 100 et 150 grammes par mètre carré.

5. Feuille d'enveloppement selon la revendication 3 ou 4, **caractérisée en ce que** la feuille d'enveloppement comprend une quantité de résine pour laquelle le poids à sec est inférieur à 100 grammes par mètre carré.

6. Feuille d'enveloppement selon une des revendications 3 à 5, **caractérisée en ce que** le côté inférieur de la feuille d'enveloppement n'est pas saturé avec de la résine.

7. Feuille d'enveloppement selon une des revendications 3 à 6, **caractérisée en ce que** des fibres de papier libres sont présentes sur le côté inférieur de la feuille d'enveloppement.

8. Feuille d'enveloppement selon une des revendications 3 à 7, **caractérisée en ce que** la résine susmentionnée est une résine de mélamine-formaldéhyde ou une résine d'urée-formaldéhyde ou une résine de phénol-formaldéhyde.

9. Feuille d'enveloppement selon la revendication 8, **caractérisée en ce que** la résine mentionnée ci-dessus comprend en outre une résine acrylique, un polyol tel que le butanediol ou le polyuréthane diol, un polyol acrylique ou un quelconque autre acrylate comprenant un groupe fonctionnel hydroxyle.

10. Procédé de production d'une feuille d'enveloppement, **caractérisé en ce que** les feuilles de papier indiquées ci-après sont stratifiées au cours d'une opération de compression, de préférence chauffée :
- une feuille de papier, de préférence transparente ou translucide, qui possède un grammage du papier de 15 à 30 grammes par mètre carré, qui est munie d'une résine, dans lequel le poids à sec de la résine appliquée est au moins aussi élevé que le grammage du papier ;
- une feuille de papier imprimée qui possède un grammage du papier de 50 à 90 grammes par mètre carré et encore mieux de 60 à 80 grammes par mètre carré, qui est exempte de résine ou qui est munie d'une quantité de résine pour laquelle le poids à sec est inférieur à la moitié du grammage du papier ;
- une feuille de support qui possède un grammage du papier inférieur ou égal au grammage du papier de la feuille de papier imprimée mentionnée ci-dessus, dans lequel cette feuille de support est exempte de résine ou est munie d'une quantité de résine pour laquelle le poids à sec est inférieur à la moitié du grammage du papier de la feuille de support en question.

11. Procédé selon la revendication 10, **caractérisé en ce que** la feuille d'enveloppement mentionnée ci-dessus possède en outre les caractéristiques en conformité avec une ou plusieurs des revendications 2 à 9.

12. Profil de finition pour la finition d'un revêtement tel qu'un revêtement de sol, un revêtement de mur ou un revêtement de plafond, dans lequel le profil de finition mentionné ci-dessus est constitué de manière essentielle d'une partie centrale et d'un revêtement possédant une configuration en forme de couche, **caractérisé en ce que** le revêtement possédant une configuration en forme de couche est obtenu par enveloppement avec une feuille d'enveloppement en conformité avec, respectivement avec une feuille d'enveloppement produite en conformité avec une des revendications 1 à 11.

13. Profil de finition selon la revendication 12, **caractérisé en ce que** le revêtement mentionné ci-dessus qui possède une configuration en forme de couche est appliqué en une seule pièce sur une portion du profil de finition, faisant office de coin, dans lequel le rayon de la portion faisant office de coin est inférieur à 3 mm, de préférence inférieur à 1,5 mm.

14. Profil de finition selon la revendication 13, **caractérisé en ce que** le profil de finition est une plinthe, dans lequel ladite portion faisant office de coin forme la transition entre le côté avant et le côté supérieur de ladite plinthe.
